# EUROPÄISCHE PATENTSCHRIFT

(11) **EP 1 013 056 B1**
(45) Veröffentlichungstag und Bekanntmachung des Hinweises auf die Patenterteilung: **25.05.2005**
(21) Anmeldenummer: 98951207.4
(22) Anmeldetag: 24.08.1998
(51) Int. Cl.: H04M 3/20, H04M 3/42, H04Q 3/72, H04M 7/00

(54) **VERFAHREN ZUR ABWICKLUNG VON FERNMELDEVERBINDUNGEN ÜBER EINE ÖFFENTLICHE VERMITTLUNGSSTELLE**
METHOD FOR EXECUTING TELECOMMUNICATION CONNECTIONS OVER A PUBLIC NETWORK POSITION
PROCEDE PERMETTANT D'EXECUTER DES LIAISONS DE TELECOMMUNICATIONS VIA UN CENTRAL TELEPHONIQUE PUBLIC

(30) Priorität: 11.09.1997 DE 19739981
(43) Veröffentlichungstag der Anmeldung: 28.06.2000
(73) Patentinhaber: SIEMENS AKTIENGESELLSCHAFT, 80333 München (DE)
(72) Erfinder: KREUSCH, Norbert, D-82061 Neuried (DE); RÖTZ, Robert, D-83404 Ainring (DE)
(86) Internationale Anmeldenummer: PCT/DE1998/002483
(87) Internationale Veröffentlichungsnummer: WO 1999/013630

(56) Entgegenhaltungen:
- EP-A- 0 512 704
- EP-A- 0 736 993
- WO-A-97/16916

## Beschreibung

Die Erfindung betrifft ein Verfahren zur Abwicklung von Fernmeldeverbindungen über eine öffentliche Vermittlungsstelle mit Endeinrichtungen, die von einer Mehrzahl von Fernmeldeteilnehmern genutzt werden, wobei die Zuordnung eines Fernmeldeteilnehmers zu einer solchen Fernmeldeverbindung in der Endeinrichtung erfolgt.

In einer solchen Situation dient das Vermittlungsnetz in erster Linie als Transportmedium und ist ohne Informationen darüber, zu welchen Teilnehmern die über sie laufenden Verbindungen in Zusammenhang stehen und welche Funktionen in diesem Zusammenhang abgewickelt werden.

Ein Beispiel für eine derartige Konstellation ist der Anschluß eines Mailboxsystems, das aus der Sicht der Vermittlungsstelle ein unter einer bestimmten Fernsprechnummer erreichbares Endgerät ist, das aber einer Vielzahl von Teilnehmern zur Verfügung steht. Wenn ein Fernsprechteilnehmer den Inhalt seines individuellen Mailboxspeichers abfragen möchte, dann hat er über die öffentliche Vermittlungsstelle eine Fernsprechverbindung zu dem Mailboxsystem herzustellen und wird dann beispielsweise aufgefordert, einen Identifizierungscode über die bestehende Sprachverbindung an das Mailboxsystem zu senden, der ihm dort den Zugang zu seinem Sprachspeicherteil verschafft. In der Vermittlungsstelle liegen in diesem Zusammenhang keine Informationen vor, welcher Sprachspeicherteil abgefragt wird.

In diesem wie in vergleichbaren Fällen können in der öffentlichen Vermittlungsstelle implementierte Funktionen auf solche Fernsprechteilnehmer, die eine Endeinrichtung gemeinsam nutzen, nicht angewendet werden. Ein Beispiel für eine solche Funktion ist die Überwachbarkeit von Fernsprechverbindungen, die z. B. durch das deutsche Kommunikationsgesetz gefordert ist.und die sich auch auf Sprach- oder Fax-Mailboxen bezieht. (Verfahren zur gezielten Überwachung von Fernsprechverbindungen normaler Endgeräte, von denen ein modernes Verfahren in der EP 0 736 991 beschrieben wird, sind für die teilnehmerspezifische Überwachung von Sprach- oder Fax-Mailboxen nicht brauchbar.)

Bisher mußte daher so vorgegangen werden, daß für solche Endgeräte wie das Mailboxsystem die Funktion der Überwachbarkeit zusätzlich im Endgerät implementiert wurden bzw. solche Endgeräte wurden durch zusätzliche Anschaltemöglichkeiten erweitert.

In der EP 0 512 704 A2 wird ein System und Verfahren zur Erkennung des Ausgangspunktes von Notrufen in einem Notrufsystem beschrieben. Hierbei geht es insbesondere um die Identifizierung einer von mehreren Stationen eines privaten Netzes, von der aus ein Notruf in ein öffentliches Netz eingespeist wird. Beim vorgeschlagenen System sind Mittel zu einer Protokoll-Transformation des Protokolls des privaten Netzes in ein durch das Notrufnetz auswertbares Protokoll sowie Mittel zum Zuordnen einer Telefonnummer zu der den Notruf auslösenden Station und schließlich Mittel zur Übertragung dieser Nummer an eine zentrale Beantwortungsstelle des Notrufsystems vorgesehen. Die Lösung ist ausdrücklich auf ein spezielles Notrufsystem zugeschnitten und betrifft daher nur sehr spezielle Verbindungen des privaten Netzes mit dem öffentlichen Netz. Zur Realisierung der spezifischen Funktionen sind im Notrufsystem auch spezielle, nicht dem allgemeinen Telekommunikationsnetz zugeordnete Komponenten vorgesehen, etwa ein sog. Stationsübersetzungssystem(STS)-Modul, eine Zentralverwaltung (CO) und ein Vermittlungs-Tandem. Der zur Endstellen-Identifikation erforderliche Datenverkehr seitens des privaten Netzes läuft mit diesen speziellen Komponenten des Notrufsystems ab und wird nur im Falle eines Notrufes aktiviert.

Die Aufgabe der Erfindung besteht darin, die Erstreckung von in Vermittlungsstellen integrierten Funktionen auf Endgeräte der eingangs genannten Art auf einfachere Art zu ermöglichen. Gelöst wird diese Aufgabe durch ein Verfahren gemäß dem Patentanspruch 1.

Es wird demnach spätestens nach Abschluß eines jeden Verbindungsaufbaus zu einer Endeinrichtung, die von einer Mehrzahl von Fernmeldeteilnehmern genutzt werden kann, von der Endeinrichtung zur Vermittlungsstelle ein den Fernsprechteilnehmer, den die Verbindung betrifft, kennzeichnende Information an die Vermittlungsstelle übertragen. In der Vermittlungsstelle kann dann je nachdem, ob diese Information für die Abwicklung einer auf einen Fernmeldeteilnehmer bezogenen Funktion benötigt wird, diese zum erwähnten Zweck ausgenutzt oder anderenfalls aber verworfen werden. Im Falle der Durchführung einer Überwachung von Fernmeldeteilnehmern von der öffentlichen Vermittlungsstelle aus wäre dies aufgrund des erfindungsgemäßen Verfahrens auch bezogen auf einen Fernsprechteilnehmer möglich, der von einem beliebigen Fernsprechendgerät aus, das nicht sein Anschluß sein muß, unter dem er registriert ist, seinen Mailboxspeicher abfragt.

Weitere Ausgestaltungen der Erfindung sind in Unteransprüchen gekennzeichnet. So wird gemäß einer ersten Ausgestaltung das erfindungsgemäße Verfahren auf eine Endeinrichtung wie das vorerwähnte Mailboxsystem angewendet und als einen Fernmeldeteilnehmer kennzeichnende Information die persönliche Identifikationsnummer an die öffentliche Vermittlungsstelle übertragen, die im Zuge einer aufgebauten Fernsprechverbindung zu dem Mailboxsystem beispielsweise in Form einer Mehrfrequenzencodekombination von dem abfragenden Teilnehmer an das Mailboxsystem geliefert worden ist, um dort den Zugriff auf den individuellen Sprachspeicher zu erhalten.

Gemäß einer anderen Ausgestaltung ist die Endeinrichtung, auf die das erfindungsgemäße Verfahren angewendet wird, der Netzübergangspunkt eines Dienstanbieters zum Internet und die zur öffentlichen Vermittlungsstelle übertragene Information ist die Endgerätenummer eines gerufenen Fernmeldeteilnehmers, zu dem über das Internet eine Fernmeldeverbindung hergestellt wird.

Gemäß noch einer anderen Ausgestaltung wird das erfindungsgemäße Verfahren auf eine Endeinrichtung in Form einer Nebenstelle mit Durchwahlanschlüssen angewendet, wobei an die öffentliche Vermittlungsstelle die Fernsprechnummern des Nebenstellenendgerätes übertragen werden.

Nachstehend wird das erfindungsgemäße Verfahren anhand eines Ausführungsbeispiels unter Bezugnahme auf eine Zeichnung noch näher erläutert.

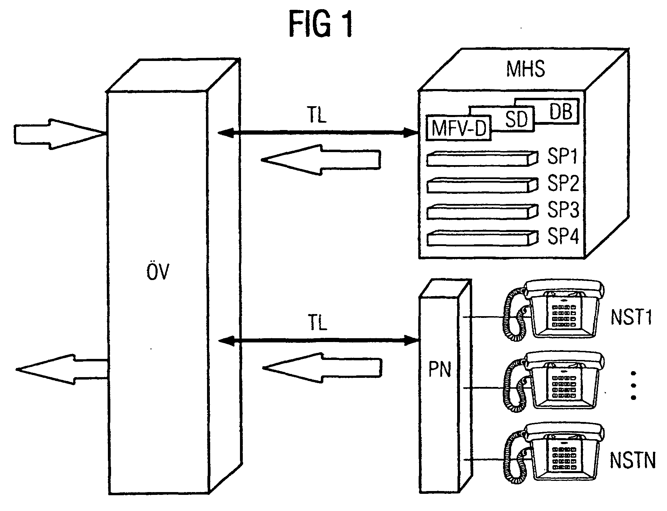

In der Figur ist mit ÖV eine öffentliche Vermittlungsstelle bezeichnet, über die in üblicher Weise Fernmeldeverkehr abgewickelt wird, was durch breite Pfeile auf der linken Seite angedeutet ist.

An diese öffentliche Vermittlungsstelle sind neben anderen, hier nicht dargestellten Endgeräten über Teilnehmerleitungen TL Endeinrichtungen angeschlossen, die von einer Mehrzahl von Fernmeldeteilnehmern genutzt werden. Als Beispiel sind hier ein Mailboxsystem MHS sowie eine durchwahlfähige Nebenstellenanlage PN gezeigt.

Der Anschluß dieser Endgeräteeinrichtungen erfolgt über eine Schnittstelle, die einen Signalisierungskanal bietet, beispielsweise eine nach dem ISDN-Protokoll DSS1 arbeitende Schnittstelle.

Als Bestandteile des Mailboxsystems MHS sind Sprachspeicherabschnitte SP1 bis SP4 gezeigt, die definierten Teilnehmern individuell zugeordnet sind. Ferner sind ein Mehrfrequenzencodezeichen-Decoder MFV-D, ein Sprachdecoder SD und eine Datenbasis DB angedeutet.

Die Datenbasis der öffentlichen Vermittlungsstelle ÖV enthält normalerweise keine Angaben über die Teilnehmer, denen im Mailboxsystem MHS ein Sprachspeicheranteil zugeordnet ist, bzw. über die Teilnehmerendgeräte NST1 bis NSTN der Nebenstellenanlage PN. Diese ist entbehrlich, weil die Entscheidung darüber, mit welchem der einer Mehrzahl von Teilnehmern der Endeinrichtungen eine Verbindung herzustellen ist, innerhalb der Endeinrichtungen getroffen wird. So erfolgt, wie schon angedeutet, die Abfrage eines Sprachspeicheranteils des Mailboxsystems durch einen Fernsprechteilnehmer, dem dieser zugeordnet ist, dadurch, daß durch Wahl der Fernsprechnummer der Endgeräteeinrichtung "Sprachspeichersystem" eine Fernsprechverbindung zu dieser Endeinrichtung hergestellt wird und dann gegebenenfalls auf Aufforderung hin über den Sprachkanal durch Tastwahlbetätigung am rufenden Fernsprechendgerät eine persönliche Identifikationsnummer eingegeben wird. Nach Decodierung derselben durch den Decoder MFV-D und durch Vergleich mit den Einträgen in der Datenbasis DB kann das Mailboxsystem MHS dann einen Zusammenhang der aufgebauten Verbindung mit dem betreffenden Sprachspeicherteil herstellen.

Wenn in der öffentlichen Vermittlungsstelle ÖV die Funktion einer Überwachung von konkreten Gesprächsverbindungen implementiert ist, kann bei den bisherigen Verhältnissen, wie dargelegt, eine Überwachung von solchen zu einem Mailboxsystem führenden Verbindungen nicht ohne weiteres durchgeführt werden.

Erfindungsgemäß ist vorgesehen, daß bei allen zu solchen Endeinrichtungen, die mehreren Fernmeldeteilnehmern bzw. deren teilnehmerindividuellen Einrichtungen zur Verfügung stehen, im Zusammenhang mit jedem Verbindungsaufbau und zwar spätestens nach Abschluß desselben einen der zu der Endeinrichtung gehörenden Fernmeldeteilnehmer, dem die Verbindung gilt, kennzeichnende Information an die Vermittlungsstelle gesendet wird. Im Falle des geschilderten Mailboxsystems MHS würde also von diesem die persönliche Identifizierungsnummer oder, nachdem der Zugriff suchende Fernmeldeteilnehmer durch Decodierung der persönlichen Identifizierungsnummer erkannt worden ist, eine diesen kennzeichnende Information über den Signalisierungskanal der Schnittstelle DSS1 an die öffentliche Vermittlungsstelle ÖV übertragen.

Die Vermittlungsstelle könnte dann diese Information mit Einträgen in einer Tabelle vergleichen, in denen solche Fernmeldeteilnehmer gekennzeichnet sind, deren Fernmeldeverbindungen überwacht werden sollen. Wird ein solcher Eintrag gefunden, dann können die der Überwachung dienende Prozeduren in Gang gesetzt werden. Ist ein solcher Eintrag nicht vorhanden, dann wird die vom Mailboxsystem her übertragene Information verworfen.

Ähnliche Vorgänge spielen sich im Zusammenhang mit dem Endgerät "Nebenstelle mit Durchwahl" ab, wobei als die Teilnehmer kennzeichnende Informationen im Datenkanal der Schnittstelle DSS1 Daten übertragen werden, die Nebenstellen-Endgerätenummern bedeuten. Auch hier kann die zur öffentlichen Vermittlungsstelle ÖV übertragene Information im Zusammenhang mit der Gesprächsüberwachung bestimmter Nebenstellenteilnehmer ausgenutzt werden. Eine andere Anwendungsmöglichkeit bestünde im Erstellen von Einzelgesprächsnachweisen für Nebenstellenanschlüsse.

Eine weitere hier nicht dargestellte Art von Endeinrichtungen, die einer Mehrzahl von Fernmeldeteilnehmern zur Verfügung stehen, wären, wie angedeutet, Zugangspunkte (PoP, Point of Presence) von Internetprovidern, die zum Internet führen. Auch in diesem Zusammenhang käme die Überwachung von Fernsprechverbindungen mit Fernmeldeteilnehmern in Frage, die unter Mitwirkung des Internetproviders, also abgesehen von der Herstellung einer Verbindung zur Endeinrichtung PoP ohne weiteres Zutun der öffentlichen Vermittlungsstelle zustandegebracht werden.

In diesem Fall wäre die zur öffentlichen Vermittlungsstelle übertragene Information die Endgerätenummer eines gerufenen Teilnehmers, zu dem über das Internet eine Fernmeldeverbindung hergestellt wird.

## Patentansprüche

1. Verfahren zur Abwicklung von Fernmeldeverbindungen über eine öffentliche Vermittlungsstelle (ÖV) mit Endeinrichtungen (MHS; PN), die von einer Mehrzahl von Fernmeldeteilnehmern (SP1 bis SP4; NST1 bis NSTN) genutzt werden, wobei die Zuordnung eines Fernmeldeteilnehmers zu einer solchen Fernmeldeverbindung in der Endeinrichtung (MHS; PN) erfolgt, **dadurch gekennzeichnet, daß** spätestens nach Abschluß eines jeden Verbindungsaufbaus von der Endeinrichtung (MHS; PN) eine den Fernmeldeteilnehmer, den die Verbindung betrifft, kennzeichnende Information an die Vermittlungsstelle (ÖV) übertragen wird.

2. Verfahren nach Anspruch 1, dadurch gekennzeichn e t, daß die Endeinrichtung ein Mailboxsystem (MHS) ist, und daß als die einen Fernmeldeteilnehmer (SP1 bis SP4) kennzeichnende Information die persönliche Identifikationsnummer, die ein Fernmeldeteilnehmer als Berechtigungsnachweis für den Zugriff auf den ihm zugeordneten Mailboxspeicherteil an die Endeinrichtung sendet, oder eine den Fernmeldeteilnehmer kennzeichnende, durch Decodierung der persönlichen Identifikationsnummer gewonnene Information übertragen wird.

3. Verfahren nach Anspruch 1, **dadurch gekennzeichnet , daß** die Endeinrichtung der Netzübergangspunkt eines Dienstanbieters zum Internet ist, und daß die zur öffentlichen Vermittlungsstelle (ÖV) übertragene Information die Endgerätenummer eines gerufenen Teilnehmers ist, zu dem über das Internet eine Fernmeldeverbindung hergestellt wird.

4. Verfahren nach Anspruch 1, **dadurch gekennzeichnet, daß** die Endeinrichtung eine Nebenstelle (PN) mit Durchwahlanschlüssen ist, und daß die zur öffentlichen Vermittlungsstelle (ÖV) übertragene Information die interne Nebenstellen-Fernsprechnummer eines Fernsprechteilnehmers (NST1 bis NSTN)ist.

## Claims

1. Method for processing telecommunication connections via a public exchange (ÖV) with terminal devices (MHS; PN), which are used by a plurality of telecommunication users (SP1 to SP4; NST1 to NST4), the assignment of a telecommunication user to such a telecommunication connection taking place in the terminal device (MHS; PN),
**characterised in that**
information identifying the telecommunication user to whom the connection relates is transmitted to the exchange (ÖV) from the terminal device (MHS; PN), at the latest after termination of any connection set-up.

2. Method according to Claim 1,
**characterised in that** the terminal device is a mailbox system (MHS) and that the personal identification number that a telecommunication user sends to the terminal device as proof of authorisation for access to the mailbox storage element assigned to them or information identifying the telecommunication user and obtained by decoding the personal identification number, is transmitted as the information identifying a telecommunication user (SP1 to SP4).

3. Method according to Claim 1,
**characterised in that** the terminal device is the network transition point of a service provider to the Internet and that the information transmitted to the public exchange (ÖV) is the terminal number of a called user, to whom a telecommunication connection is established via the Internet.

4. Method according to Claim 1,
**characterised in that** the terminal device is an extension (PN) with direct inward dialling lines and that the information transmitted to the public exchange (ÖV) is the internal extension number of a telephone user (NST1 to NST4).

## Revendications

1. Procédé permettant d'exécuter des liaisons de télécommunication via un central téléphonique public (ÖV) avec des terminaux (MHS; PN) utilisés par une pluralité d'abonnés aux télécommunications (SP1 à SP4; NST1 à NSTN), l'attribution d'un abonné aux télécommunications à une de ces liaisons de télécommunication ayant lieu dans le terminal (MHS; PN), **caractérisé en ce qu'**une information caractérisant l'abonné aux télécommunications concerné par la liaison est transmise du terminal (MHS; PN) au central téléphonique (ÖV) au plus tard à la fin de l'établissement de chaque liaison.

2. Procédé selon la revendication 1, **caractérisé en ce que** le terminal est un système de boîtes aux lettres (MHS) et **en ce que** l'on transmet, en tant qu'information caractérisant un abonné aux télécommunications (SP1 à SP4), le numéro d'identification personnel envoyé au terminal par un abonné aux télécommunications en tant que preuve de son droit à l'accès à la partie de mémoire de boîte aux lettres qui lui est attribuée ou une information caractérisant l'abonné aux télécommunications obtenue par décodage du numéro d'identification personnel.

3. Procédé selon la revendication 1, **caractérisé en ce que** le terminal est le point d'interconnexion au réseau d'un fournisseur de services vers l'Internet et **en ce que** l'information transmise au central téléphonique public (ÖV) est le numéro de terminal d'un abonné appelé vers lequel une liaison de télécommunication est établie via l'Internet.

4. Procédé selon la revendication 1, **caractérisé en ce que** le terminal est un poste supplémentaire (PN) avec des connexions par numérotation directe et **en ce que** l'information transmise au central téléphonique public (ÖV) est le numéro téléphonique de poste supplémentaire interne d'un abonné téléphonique (NST1 à NSTN).
